Europäisches Patentamt

European Patent Office

Office européen des brevets

(19)

(11) **EP 0 829 453 B1**

(12) **FASCICULE DE BREVET EUROPEEN**

(45) Date de publication et mention
de la délivrance du brevet:
**20.02.2002 Bulletin 2002/08**

(51) Int Cl.⁷: **C01B 17/05**, B01D 53/52

(21) Numéro de dépôt: **97402087.7**

(22) Date de dépôt: **08.09.1997**

(54) **Procédé et dispositif de traitement d'un gaz contenant de l'hydrogène sulfuré et du dioxyde de soufre comportant une étape d'appauvrissement en soufre du solvant recyclé**

Verfahren und Vorrichtung zur Behandlung von Schwefelwasserstoff und Schwefeldioxid enthaltenden Gasen mit einer Schwefelreduzierungsstufe aus wiedergewonnenem Lösungsmittel

Process and apparatus for the treatment of gases containing hydrogen sulphide and sulphur dioxide including a sulphur reduction step of the recycled solvent

(84) Etats contractants désignés:
**DE ES GB IT NL**

(30) Priorité: **16.09.1996 FR 9611409**

(43) Date de publication de la demande:
**18.03.1998 Bulletin 1998/12**

(73) Titulaire: **INSTITUT FRANCAIS DU PETROLE**
**92852 Rueil-Malmaison Cedex (FR)**

(72) Inventeurs:
  • **Lecomte, Fabrice**
    **92500 Rueil-Malmaison (FR)**
  • **Viltard, Jean-Charles**
    **26000 Valence (FR)**
  • **Dezael, Claude**
    **78600 Maisons Lafitte (FR)**

(56) Documents cités:
  **FR-A- 2 122 674          FR-A- 2 411 802**

EP 0 829 453 B1

## Description

La présente invention a pour objet un procédé et un dispositif de traitement d'un effluent gazeux d'une unité Claus ou d'un gaz contenant de l'hydrogène sulfuré et de l'anhydride sulfureux.

Elle concerne notamment le traitement d'effluents d'unités Claus provenant d'unités d'hydrodésulfuration et de craquage catalytique. Elle concerne aussi le traitement d'épuration du gaz naturel.

L'art antérieur est notamment illustré par la demande de brevet FR-A-2 411 802.

Le procédé Claus est largement utilisé pour récupérer du soufre élémentaire à partir de charges gazeuses contenant de l'hydrogène sulfuré ($H_2S$). Cependant, même après plusieurs étages catalytiques, les fumées émises par les installations d'unités de type Claus, renferment des quantités non négligeables de gaz acides. Il est alors nécessaire de traiter ces effluents (tail gas) d'unités Claus pour éliminer la majorité des composés toxiques de façon à respecter les normes antipollution. Ces normes deviennent de plus en plus sévères et il est nécessaire d'améliorer en permanence la technologie existante.

Il est connu par exemple de récupérer, à partir d'une unité Claus, environ 95% poids de soufre présent; un traitement de cet effluent d'unité Claus (par une unité Clauspol par exemple) permet d'atteindre par exemple 99,8% en poids de soufre récupéré, à partir de la réaction:

$$2\,H_2S + SO_2 \rightleftarrows 3\,S + 2\,H_2O$$

qui met en oeuvre un milieu réactionnel constitué par un solvant organique et un catalyseur comprenant un sel alcalin ou alcalino-terreux d'un acide organique. La réaction s'effectue à contre-courant dans un réacteur-contacteur et sa température est contrôlée par passage du solvant qui a été soutiré à l'extrémité inférieure du réacteur par une pompe de circulation, dans un échangeur thermique, de façon à favoriser le taux de plus élevé de conversion en soufre, tout en évitant la formation de soufre solide. Le soufre est donc récupéré sous forme liquide. Le procédé quoique très performant, est limité par différentes contraintes :

- l'équilibre thermodynamique de la réaction est tel que la réaction n'est jamais complète. De l'hydrogène sulfuré et du dioxyde de soufre restent en équilibre avec le soufre et l'eau formés. Typiquement, la quantité de soufre présent dans $H_2S$ et $SO_2$ qui n'ont pas réagi et que l'on retrouve dans l'effluent réactionnel (de Clauspol) correspond à environ 0,1% du soufre total de la charge initiale de l'unité Claus. Une meilleure conversion peut être envisagée à une température opératoire plus faible mais cette température doit être maintenue au-dessus du point de congélation du soufre (environ 120°C), sinon le réacteur serait obstrué par du soufre solide ;

- la présence de soufre liquide non séparé dans le réacteur-contacteur, qui est entraîné dans le solvant et le catalyseur qui circulent et que l'on recycle dans le réacteur-contacteur. En effet, toutes les gouttelettes de soufre liquide ne sont pas séparées du solvant et la présence de soufre liquide entraîne irrémédiablement la présence de soufre gazeux dans l'effluent due à la tension de vapeur du soufre. Par exemple, la quantité de soufre non récupéré attribuable à sa tension de vapeur est d'environ 0,1% poids de soufre de la charge initiale.

L'objet de l'invention est de remédier aux inconvénients de l'art antérieur.

Un autre objet de l'invention est de satisfaire aux normes les plus sévères de lutte contre la pollution atmosphérique par les composés soufrés.

Un autre objet de l'invention est de pouvoir modifier les installations existantes disposant d'une unité Claus et d'une unité de traitement des effluents de ladite unité (Unité Clauspol) à un coût très faible.

On a constaté qu'en éliminant sensiblement tout le soufre vapeur dans les effluents d'unités de traitement de gaz et par exemple d'effluents de queue d'unités Claus, on pouvait récupérer jusqu'à 99,9% du soufre total et minimiser ainsi la quantité de soufre rejeté dans l'atmosphère lors de l'incinération du gaz.

On a observé qu'en mettant en contact un solvant organique partiellement appauvri en soufre avec une charge gazeuse dont une partie de $H_2S$ et $SO_2$ a été retirée, on obtenait de très bons résultats.

De manière plus détaillée l'invention concerne un procédé de traitement d'un gaz contenant de l'hydrogène sulfuré et de l'anhydride sulfureux dans lequel on met en contact dans une première zone de contact et de réaction gaz-liquide à une température adéquate le gaz (3) avec au moins un solvant organique et on récupère séparément un effluent contenant de l'eau et du soufre vapeur, et du soufre liquide, le procédé étant caractérisé en ce qu'on introduit l'effluent gazeux dans une deuxième zone de contact et de réaction, on le met en contact, dans des conditions appropriées, avec au moins un solvant organique recyclé appauvri en soufre on récupère séparément un gaz épuré ne contenant sensiblement pas de soufre vapeur et ledit solvant riche en soufre, on prélève une partie au moins dudit solvant riche en soufre, avantageusement au plus 50% du débit, on refroidit ladite partie du solvant de façon à obtenir une suspension de cristaux de soufre dans le solvant, on sépare les cristaux de soufre du solvant et on recycle ladite partie de solvant refroidie, appauvrie en soufre au moins en partie, dans la deuxième zone de contact, le procédé étant caractérisé en ce qu'au moins une des deux zones de contact contient au moins un catalyseur de réaction.

Selon une caractéristique de l'invention, la partie restante du solvant organique riche en soufre provenant de la seconde zone de contact peut être recyclée dans la seconde zone de contact et plus précisément dans sa partie supérieure après avoir été éventuellement refroidie.

Selon une autre caractéristique du procédé, on peut refroidir la partie de solvant destinée à être appauvrie en soufre par un échange indirect de chaleur ou par mélange avec une quantité adéquate d'eau ou par une combinaison de ces moyens à une température généralement inférieure à la température de fusion du soufre et de préférence à une température comprise entre 40 et 110°C. La quantité d'eau avantageusement introduite est telle qu'on obtient un mélange solvant/eau de 30 à 70% en poids d'eau. L'opération d'appauvrissement en soufre consiste à prélever une partie au moins du solvant organique enrichi en soufre, qui correspond généralement à au plus 50% du débit sortant de la deuxième zone de contact et de préférence de 2 à 10% du débit de la phase liquide, à la refroidir à une température telle que l'on obtient une suspension de cristaux de soufre dans le solvant saturé en soufre à ladite température de refroidissement. Après séparation des cristaux de soufre, le solvant appauvri en soufre par rapport à celui présent dans le second réacteur-contacteur, peut être réchauffé à la température de ce second réacteur-contacteur avant d'y être réintroduit.

Selon une caractéristique du procédé, on peut soutirer au moins en partie une solution monophasique dudit solvant organique, de la partie inférieure de la première zone de contact, on la refroidit de façon à éliminer une partie au moins de la chaleur de réaction mise en jeu et on la recycle dans la première zone de contact. Avantageusement, la température de la seconde zone de contact peut être inférieure à la température de la première, de préférence de 15 à 20°C.

Il est très avantageux d'utiliser le même solvant organique dans la première et dans la deuxième zone de contact. Dans ce cas, une ligne de solvant peut être connectée entre les moyens de recyclage de la solution monophasique provenant du premier réacteur dont la température a été abaissée, et l'entrée de l'échangeur thermique refroidissant la partie au moins du solvant enrichi en soufre. Cette ligne sert de ligne d'appoint en solvant pour le second réacteur-contacteur.

Il a été observé qu'il était préférable d'introduire le catalyseur dans le premier réacteur-contacteur. On élimine ainsi la majorité du soufre présent sous forme de $H_2S$ et $SO_2$ et contenu dans le gaz à traiter, le second réacteur n'assurant qu'un traitement de finition avec des dimensionnements d'appareillage réduits. Bien évidemment, il peut être introduit seulement dans le second réacteur-contacteur, ou même dans les deux.

Le procédé selon l'invention peut être mis en oeuvre selon deux variantes, dans des réacteurs verticaux.

Conformément à une première variante, on peut effectuer la mise en contact du gaz et du solvant organique dans la première zone de contact et celle de l'effluent gazeux et du solvant organique dans la deuxième zone de contact à co-courant, l'alimentation en gaz ou en effluent gazeux étant réalisée dans la partie supérieure des zones de contact ainsi que l'alimentation en solvant organique.

Conformément à une deuxième variante préférée, on peut effectuer la mise en contact du gaz et du solvant organique dans la première zone de contact et celle de l'effluent gazeux et du solvant organique dans la deuxième zone de contact à contre-courant, l'alimentation en gaz ou en effluent gazeux étant réalisée dans la partie inférieure des zones de contact, et l'alimentation en solvant organique dans la partie supérieure des zones de contact.

Bien évidemment, on peut aussi mettre en oeuvre le procédé dans des réacteurs-contacteurs horizontaux.

L'invention concerne aussi un dispositif de traitement d'un gaz contenant de l'hydrogène sulfuré et de l'anhydride sulfureux. Habituellement il comprend un premier réacteur-contacteur (2) gaz-liquide, des moyens (3) d'alimentation en gaz à traiter et des moyens (5) d'alimentation en solvant organique, des moyens de récupération (25) du soufre et des moyens (20) de sortie d'un effluent gazeux contenant du soufre sous forme vapeur, le dispositif étant caractérisé en ce qu'il comporte un deuxième réacteur-contacteur (102) connecté aux moyens de sortie de l'effluent gazeux, des moyens d'alimentation (105) en un solvant organique appauvri en soufre connectés au deuxième réacteur-contacteur, des moyens de récupération (120) d'un effluent gazeux épuré en soufre reliés au deuxième réacteur-contacteur, des moyens de soutirage (104) d'une phase liquide contenant le solvant organique et du soufre reliés au deuxième réacteur-contacteur, au moins un moyen d'appauvrissement en soufre d'une partie au moins de la phase liquide relié aux moyens de soutirage de la phases liquide, comprenant au moins un moyen (190) de refroidissement de ladite phase connecté à un moyen de séparation (118) du soufre solide qui délivre une phase solide (125) de soufre à une première extrémité et une phase (121) liquide appauvrie en soufre à une deuxième extrémité, la deuxième extrémité étant connectée aux moyens (105) d'alimentation en solvant appauvri en soufre, le dispositif étant en outre caractérisé en ce qu'un au moins des réacteurs-contacteurs contient un catalyseur.

Selon une caractéristique du dispositif, lorsqu'une partie seulement de la phase liquide contenant le solvant organique et du soufre, qui provient du second réacteur-contacteur est refroidie pour éliminer du soufre, une ligne connectée aux moyens de soutirage de ladite phase liquide peut être reliée aux moyens d'alimentation en solvant appauvri en soufre du deuxième réacteur-contacteur pour y recycler la partie restante de la phase liquide.

Il peut être avantageux de réunir le premier réacteur-contacteur et le second réacteur-contacteur dans une même enceinte. Mais ces deux réacteurs-contacteurs peuvent être dissociés. C'est le cas notamment où le deuxième réacteur-contacteur comprend un mélangeur-contacteur de type venturi-scrubber associé à un séparateur de l'effluent gazeux épuré, de la phase liquide dont la ligne de soutirage est connectée au moyen d'appauvrissement en soufre.

Le solvant organique peut être refroidi de différentes façons:

-   selon une première variante, si le solvant organique est miscible à l'eau, il peut être refroidi par échange de chaleur dans un échangeur de chaleur, avant d'être mélangé à l'effluent gazeux à épurer, par un appoint d'eau à une température inférieure à celle du solvant organique dont la chaleur de vaporisation au contact de l'effluent gazeux permettra d'abaisser la température du mélange, ou par une combinaison des deux étapes ci-dessus. De préférence, on refroidira par injection d'eau.
-   selon une deuxième variante, si le solvant organique n'est pas miscible à l'eau, il peut être refroidi de la même manière que celles selon la première variante. De préférence, on refroidira par un échangeur de chaleur.

Les différents types de solvants peuvent être les suivants:

-   dans la catégorie des solvants insolubles dans l'eau, on trouve les hydrocarbures de température d'ébullition supérieurs à 250°C et de préférence le dodécane, le tridécane, le naphta de points d'ébullition compris entre 225 et 335°C.

-   dans la catégorie des solvants solubles dans l'eau de température d'ébullition supérieure à 200°C, on trouve les polyols de 2 à 15 atomes de carbone et de préférence le glycérol, le thiodiglycol, le cyclohexane diméthyléthanol, les esters d'acides de 5 à 15 atomes de carbone et plus particulièrement le triméthylpentane-diol monoisobutyrate et le diméthyladipate, les éthers de glycol de 5 à 15 atomes de carbone et avantageusement le butoxytriglycol, l'éthoxytriglycol, le diéthylène glycol butyléther, l'éthylène glycol phényl éther, le terpinyl éthylène glycol monobenzyl éther, l'éthylène glycol butyl phényl éther, le diéthylène glycol, le diéthylène glycol diméthyléther, le diéthylène glycol dibutyl éther, le triéthylène glycol, le tétra éthylène glycol diméthyl éther, le propylène n-butyl éther, le dipropylène n-butyléther, le tripropylène n-butyléther, le tripropylène n-butyléther, et les polyéthylènes glycol de masses moléculaires 200, 300, 400 ou 600.

Les catalyseurs et solvants généralement utilisés sont ceux décrits par exemple dans les brevets FR 2 115 721 (US 3796796), FR 2 122 674 et FR 2 138 371 (US 3832454) incorporés comme références. Plus particulièrement, on peut utiliser des sels alcalins d'acides organiques tels que l'acide benzoïque et l'acide salicylique en tant que catalyseurs.

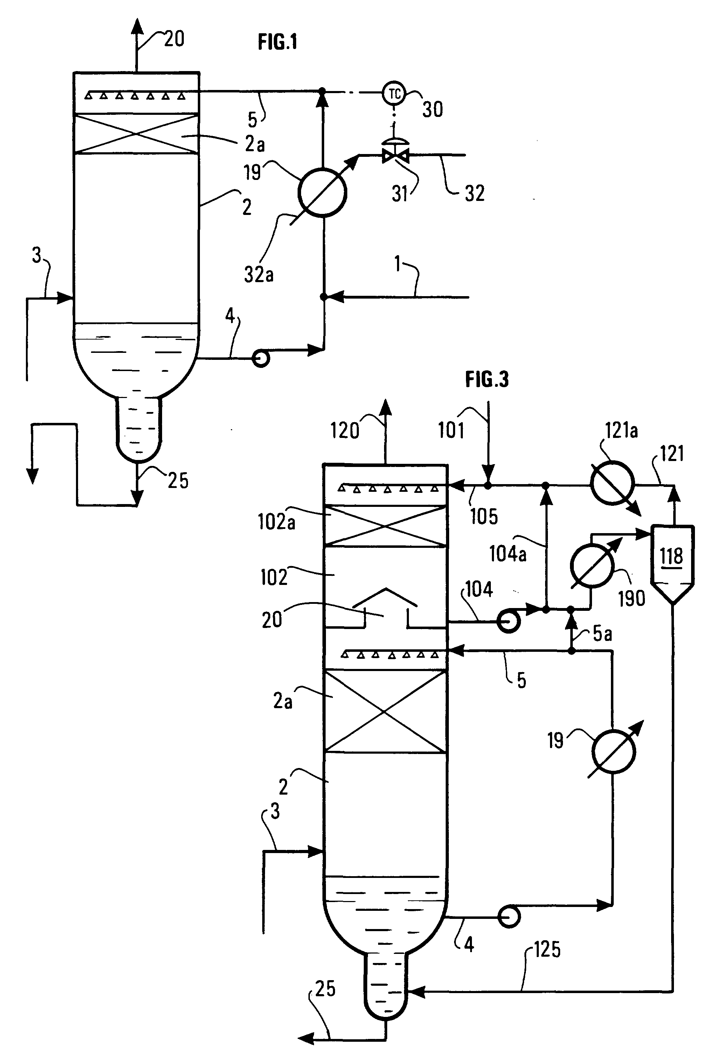

L'invention sera mieux comprise au vu des figures suivantes, illustrant de manière schématique un dispositif selon l'art antérieur (figure 1) et deux variantes de dispositif parmi lesquelles :

-   la figure 2 montrant deux réacteurs-contacteurs dissociés,
-   et la figure 3 représentant les deux réacteurs-contacteurs dans une même enceinte.

Selon la figure 1, un réacteur-contacteur (2) vertical reçoit par une ligne d'alimentation (3) en sa partie inférieure, un gaz contenant $H_2S$ et $SO_2$. Ce réacteur comprend une colonne (2) contenant un lit de garnissage de selles Intalox par exemple, ayant la propriété de retenir les sels de sodium formés lors de la réaction. Un solvant organique contenant un catalyseur soluble alimenté par une ligne (1) et provenant d'une ligne (4) de recyclage à la partie inférieure du réacteur-contacteur (2), est introduit par une ligne (5) à la partie supérieure de ce réacteur de sorte que le contact du gaz à traiter et du solvant soit effectué à contre-courant. Le solvant de la ligne (4) est refroidi par un échangeur thermique (19) dont la température est contrôlée et régulée par un système de mesure (30) associé à une vanne (31) située sur une ligne d'introduction d'eau chaude (32) vers 80°C. Cette eau est évacuée par une ligne (32a).

Le gaz épuré est soutiré du réacteur par une ligne (20) en tête de réacteur tandis que le soufre formé décante en fond de réacteur et est extrait par une ligne (25).

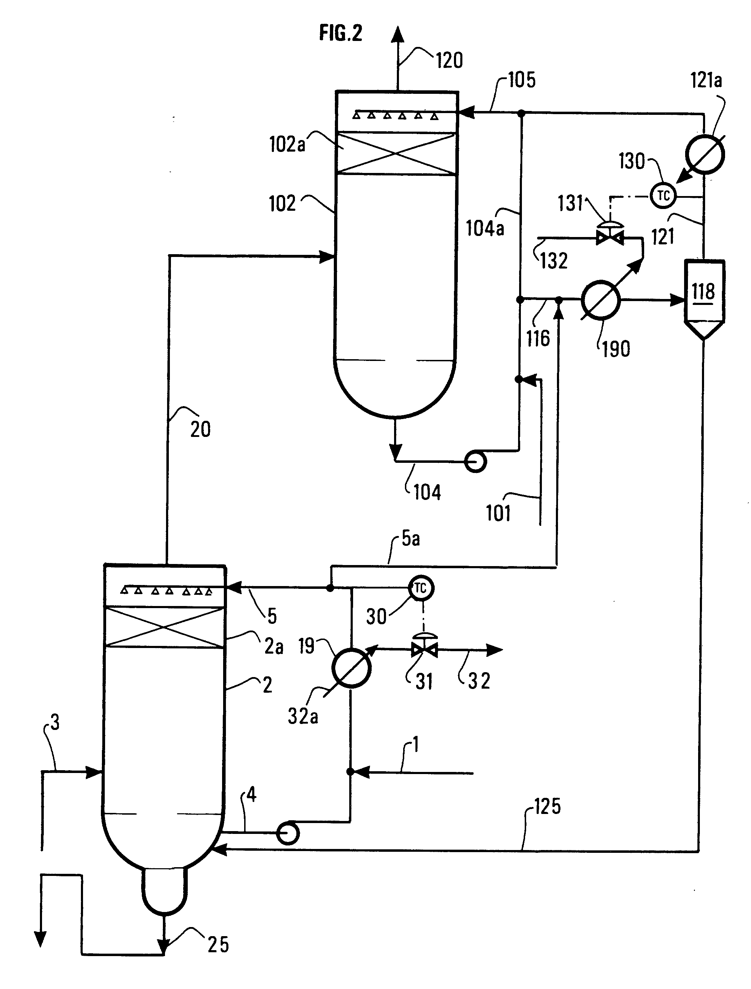

Selon la figure 2 illustrant un mode de réalisation du dispositif selon l'invention, celui-ci comporte deux réacteurs-contacteurs verticaux séparés, dont le premier est conforme à la description de la figure 1 avec les mêmes références.

La ligne (20) récupérant l'effluent gazeux du premier réacteur-contacteur (2), alimente un second réacteur-contacteur (102) en sa partie inférieure. Ce réacteur (102) comporte un lit de garnissage (102a) qui peut être identique ou pas à celui du premier réacteur.

Du catalyseur amené par la ligne (101) et du solvant organique sont introduits par des lignes (104), (104a) et (105) en tête du second réacteur-contacteur qui réalise donc un contact gaz liquide à contre-courant dans le garnissage.

Une partie, 2 à 10% par exemple, du solvant contenant du soufre et du catalyseur soutirée par la ligne (104) est refroidie à 60-70°C par un échangeur indirect de chaleur (190) via une ligne (116), ce qui produit la cristallisation du soufre et l'appauvrissement en soufre du solvant. L'échange de chaleur est réalisé par injection d'eau (132) et évacuation (132a) sur une ligne (121) en amont d'un échangeur (121a).

Le soufre en suspension est envoyé dans un hydrocyclone (118) où le solvant est séparé du soufre. En tête de l'hydrocyclone, une ligne (121) sur laquelle est situé éventuellement un autre échangeur de chaleur (121a) destiné à réchauffer le solvant appauvri en soufre est relié à la ligne (104a), éventuellement refroidie à son tour, et leur contenu est recyclé par la ligne (105) au dessus du garnissage (102a).

Une vanne de contrôle du refroidissement (131) connectée à l'échangeur (190) est associée à un contrôle de température (130) relié à une sonde de température qui est disposée en amont de l'échangeur (121a) sur la ligne (121).

En fond de l'hydrocyclone (118), on récupère par une ligne (125) du soufre qui est mélangé avec celui qui provient du premier réacteur-contacteur (2) et qui y est fondu avant d'être soutiré par la ligne (25).

Le gaz épuré enfin, est récupéré en tête du second réacteur-contacteur par une ligne (120).

Lorsque le solvant organique et le catalyseur sont les mêmes dans les deux réacteurs, une ligne (5a) connectée à la ligne (5) du premier réacteur-contacteur permet de réaliser un appoint de solvant et de catalyseur dans le second en l'introduisant à l'entrée de l'échangeur (190).

Bien évidemment, lorsque les solvants dans les deux réacteurs sont différents, cette ligne (Sa) est supprimée et le soufre provenant de l'hydrocyclone (118) est produit et fondu séparément via la ligne (125)

Selon la figure 3, on utilise un réacteur-contacteur vertical composé de deux étages (2 et 102) de réaction et de contact, conforme aux premier et second réacteurs-contacteurs de la figure 2, sauf que:

- le premier réacteur-contacteur ne contient pas de catalyseur et donc de ligne d'alimentation (1) en catalyseur dans la ligne de solvant (4),

- le gaz en partie débarrassé de $H_2S$ et $SO_2$ (20) est introduit directement dans la partie inférieure du second étage (102) par l'intermédiaire de la cheminée (20) qui récupère en outre le solvant, le catalyseur et du soufre soutiré par la ligne (104) pour être appauvri en partie en soufre par l'échangeur (190) et l'hydrocyclone (118).

Les exemples suivant illustrent l'invention:

Exemple 1 selon l'art antérieur (fig.1).

Les caractéristiques sont les suivantes :

Charge : gaz de queue d'unité Claus, débit: 12302 $Nm^3$/h.
Température du réacteur: 125°C.
Garnissage : selles Intalox en céramique, surface spécifique: 250 $m^2/m^3$.
Solvant : Polyéthylène glycol M=400, débit: 500$m^3$/h.
Catalyseur : salicylate de sodium à une concentration de 100 millimoles par kg de solvant.

Solvant recyclé (lignes 4 et 5).

- Débit : 500 $m^3$/h.
- Température : 123°C.
- Débit de soufre produit (ligne 25): 315 kg/h.

Les compositions des gaz d'entrée et de sortie de l'unité sont dans le tableau I suivant :

Tableau I

|  | Gaz entrée (ligne 3) | Gaz sortie (ligne 20) |
|---|---|---|
|  | % volume | % volume |
| H2S | 1,234 | 0,126 |
| SO2 | 0,617 | 0,063 |

Tableau I   (suite)

|  | Gaz entrée (ligne 3) | Gaz sortie (ligne 20) |
|---|---|---|
|  | % volume | % volume |
| $CO_2$ | 4,000 | 4,072 |
| COS | 0,015 | 0,009 |
| $CS_2$ | 0,015 | 0,009 |
| $S^*_v$ | 0,140 | 0,031 |
| $N_2$ | 60,000 | 61,079 |
| $H_2O$ | 34,000 | 34,612 |
| somme des composés soufrés | 2,036 | 0,247 |
| $S^*_v$ = soufre vapeur + soufre vésiculaire | | |

Le rendement en composés soufrés dans le réacteur est égal à:

$$\frac{(\text{\% composés soufrés entrée - \% composés soufrés sortie})\times 100}{\text{\% composés soufrés entrée}}$$

$$= \frac{(2{,}036 - 0{,}247)\times 100}{2{,}036} = 88\%$$

L'unité Claus a un rendement de 94%.
Le rendement de l'ensemble unité Claus + unité de finition égale:

$$94 + \left(\frac{6\times 88}{100}\right) = 99{,}28$$

Exemple 2 selon l'invention (figure 2).

La charge, le solvant organique, le catalyseur et le garnissage sont ceux de l'exemple 1. Les conditions opératoires du premier réacteur-contacteur (2) sont celles de l'exemple 1.
Les conditions relatives du second réacteur-contacteur (102) sont les suivantes :

Température: 110°C.

Débit de solvant et de soufre (ligne 104): 500 m³/h.

Débit de solvant refroidi (ligne 116): 50 m³/h.

Température du solvant refroidi: 65°C.

Température du solvant recyclé (ligne 105) : 108°C.

Soufre recueilli (ligne 25) : 344,3 kg/h.

Les compositions de gaz d'entrée (ligne 3) et de sortie de l'unité sont données dans le tableau II suivant :

Tableau II

|  | Gaz entrée (ligne 3) | Gaz sortie (ligne 20) |
|---|---|---|
|  | % volume | % volume |
| $H_2S$ | 1,234 | 0,040 |
| $SO_2$ | 0,617 | 0,020 |
| $CO_2$ | 4,000 | 4,084 |
| COS | 0,015 | 0,009 |
| $CS_2$ | 0,015 | 0,009 |

Tableau II (suite)

|  | Gaz entrée (ligne 3) | Gaz sortie (ligne 20) |
|---|---|---|
|  | % volume | % volume |
| Sv* | 0,140 | 0,003 |
| N2 | 59,990 | 61,180 |
| H2O | 33,990 | 34,670 |
| somme des composés soufrés | 2,032 | 0,090 |
| $S_v^*$ = soufre vapeur + soufre vésiculaire | | |

Le rendement en composés dans le réacteur est égal à :

$$\frac{(\% \text{ composés soufrés entrée} - \% \text{ composés soufrés sortie}) \times 100}{\% \text{ composés soufrés entrée}}$$

$$= \frac{(2,032 - 0,090) \times 100}{2,032} = 95,57\%$$

L'unité Claus a un rendement de 94%.

Le rendement de l'ensemble unité Claus + unité de finition égale:

$$94 + \frac{(6 \times 95,57)}{100} = 99,73$$

Exemple III selon l'invention (figure 3)

On utilise un réacteur-contacteur vertical composé de 2 étages parcourus successivement par le gaz à traiter :

- Étage inférieur (2)
  Les conditions sont similaires à celles du réacteur de l'exemple 1 ; les conditions de débit gazeux et de composition de gaz à traiter sont les mêmes.
  En revanche, on n'utilise pas de catalyseur à cet étage.

- Étage supérieur (102)
  Les conditions opératoires sont strictement les mêmes que celles du réacteur (102) de l'exemple 2. Tout le catalyseur est introduit par la ligne (101).

La composition d'entrée (ligne 3) et de sortie (ligne 120) de l'unité sont données dans le tableau III.

Tableau III

|  | Gaz entrée (ligne 3) | Gaz sortie (ligne 20) |
|---|---|---|
|  | % volume | % volume |
| H2S | 1,234 | 0,063 |
| SO2 | 0,617 | 0,0315 |
| CO2 | 4,000 | 4,000 |
| COS | 0,015 | 0,006 |
| CS2 | 0,015 | 0,006 |
| $S_v^*$ | 0,140 | 0,004 |
| N2 | 60,000 | 60,000 |
| H2O | 34,000 | 34,000 |
| somme des composés soufrés | 2,036 | 0,1165 |
| $S_v^*$ = soufre vapeur + soufre vésiculaire | | |

Le rendement en composés dans le réacteur est égal à :

$$\frac{(\% \text{ composés soufrés entrée} - \% \text{ composés soufrés sortie})\text{x}100}{\% \text{ composés soufrés entrée}}$$

$$= \frac{(2{,}036 - 0{,}1165)\text{x}100}{2{,}036} = 94{,}27 \%$$

L'unité Claus a un rendement de 94%.

Le rendement de l'ensemble unité Claus + unité de finition égale :

$$94 + \frac{(6\text{x}94{,}27)}{100} = 99{,}65$$

**Revendications**

1. Procédé de traitement d'un gaz contenant de l'hydrogène sulfuré et de l'anhydride sulfureux dans lequel on met en contact dans une première zone de contact et de réaction gaz-liquide le gaz (3) avec au moins un solvant organique et on récupère séparément un effluent contenant de l'eau et du soufre vapeur, et du soufre liquide, le procédé étant **caractérisé en ce qu'**on introduit l'effluent gazeux dans une deuxième zone de contact et de réaction, on le met en contact dans des conditions appropriées avec au moins un solvant organique recyclé appauvri en soufre, on récupère séparément un gaz épuré ne contenant sensiblement pas de soufre vapeur et ledit solvant riche en soufre, on prélève une partie au moins dudit solvant riche en soufre, avantageusement au plus 50% du débit, on refroidit ladite partie du solvant de façon à obtenir une suspension de cristaux de soufre dans le solvant, on sépare les cristaux de soufre du solvant et on recycle ladite partie de solvant refroidie, appauvrie en soufre au moins en partie, dans la deuxième zone de contact, le procédé étant en outre **caractérisé en ce qu'**au moins une des deux zones de contact contient au moins un catalyseur de réaction.

2. Procédé selon la revendication 1 dans lequel la partie restante du solvant riche en soufre est recyclée en tête dans la seconde zone de contact.

3. Procédé selon la revendication 1 ou 2 dans lequel on refroidit ladite partie de solvant destinée à être appauvrie en soufre par un échange indirect de chaleur.

4. Procédé selon l'une des revendications 1 à 3 dans lequel on refroidit ladite partie de solvant destinée à être appauvrie par mélange avec une quantité adéquate d'eau et de préférence avec une quantité telle qu'on obtient un mélange solvant-eau contenant de 30 à 70% en poids d'eau.

5. Procédé selon l'une des revendications 1 à 4 dans lequel on refroidit ladite partie de solvant à une température inférieure à la température de fusion du soufre et de préférence à une température comprise entre 40 et 110°C.

6. Procédé selon l'une des revendications 1 à 5 dans lequel on soutire au moins en partie une solution monophasique du dit solvant organique de la partie inférieure de la première zone de contact, on la refroidit de façon à éliminer une partie au moins de la chaleur de réaction mise en jeu et on la recycle dans la première zone de contact.

7. Procédé selon l'une des revendications 1 à 6 dans lequel la température de la seconde zone de contact est inférieure à la température de la première.

8. Procédé selon l'une des revendications 1 à 7 dans lequel le solvant organique de la première zone de contact et le solvant organique de la seconde zone de contact sont un même solvant.

9. Procédé selon l'une des revendications 1 à 8 dans lequel la première zone de contact contient le catalyseur.

10. Procédé selon l'une des revendications 1 à 9, dans lequel on effectue la mise en contact du gaz et du solvant organique dans la première zone de contact et celle de l'effluent gazeux et du solvant organique dans la deuxième zone de contact à contre-courant, l'alimentation en gaz ou en effluent gazeux étant réalisée dans la partie inférieure des zones de contact, et l'alimentation en solvant organique dans la partie supérieure des zones de contact.

11. Procédé selon l'une des revendications 1 à 10 dans lequel on effectue la mise en contact du gaz et du solvant organique dans la première zone de contact et celle de l'effluent gazeux et du solvant organique dans la deuxième zone de contact à co-courant, l'alimentation en gaz ou en effluent gazeux étant réalisée dans la partie supérieure des zones de contact ainsi que l'alimentation en solvant organique.

**12.** Procédé selon l'une des revendications 1 à 11, selon lequel on le met en oeuvre dans un dispositif comprenant un premier réacteur-contacteur (2) gaz-liquide, des moyens (3) d'alimentation en gaz à traiter et des moyens (5) d'alimentation en solvant organique, des moyens de récupération (25) du soufre et des moyens (20) de sortie d'un effluent gazeux contenant du soufre sous forme vapeur en tête du réacteur-contacteur, le dispositif comporte de plus un deuxième réacteur-contacteur (102) connecté aux moyens de sortie de l'effluent gazeux, des moyens d'alimentation (105) en un solvant organique appauvri en soufre connectés au deuxième réacteur-contacteur, des moyens de récupération (120) d'un effluent gazeux épuré en soufre reliés au deuxième réacteur-contacteur, des moyens de soutirage (104) d'une phase liquide contenant le solvant organique et du soufre reliés au deuxième réacteur-contacteur, au moins un moyen d'appauvrissement en soufre d'une partie au moins de la phase liquide relié aux moyens de soutirage de la phase liquide, comprenant au moins un moyen (190) de refroidissement de ladite phase connecté à un refroidissement de ladite phase connecté à un moyen de séparation (118) du soufre solide qui délivre une phase solide (125) de soufre à une première extrémité et une phase (121) liquide appauvrie en soufre à une deuxième extrémité, la deuxième extrémité étant connectée aux moyens (105) d'alimentation en solvant appauvri en soufre, et le dispositif comporte en outre un au moins des réacteurs-contacteurs qui contient un catalyseur de réaction

**13.** Procédé selon la revendication 12, dans lequel une ligne (104a) connectée aux moyens (104) de soutirage de la phase liquide contenant le solvant organique et du soufre est reliée aux moyens (105) d'alimentation en solvant organique appauvri en soufre.

**14.** Procédé selon l'une des revendications 12 à 13 dans lequel le moyen de refroidissement est choisi dans le groupe formé par un échangeur de chaleur, un appoint d'eau et une combinaison des deux.

**15.** Procédé selon l'une des revendications 12 à 14 dans lequel le premier réacteur-contacteur (2) comporte côté extrémité inférieure un moyen (4) de soutirage d'une solution monophasique, des moyens (19) de contrôle de température de la solution associés à un échangeur thermique et connectés au moyen de soutirage de la solution et des moyens de recyclage (5) de la solution monophasique refroidie dans le premier réacteur-contacteur.

**16.** Procédé selon l'une des revendications 12 à 15 dans lequel le premier réacteur-contacteur (2) et le second réacteur-contacteur (102) sont contenus dans une même enceinte.

**17.** Procédé selon la revendication (12) dans lequel le deuxième réacteur-contacteur comprend un mélangeur-contacteur de type venturi-scrubber associé à un séparateur de l'effluent gazeux épuré, de la phase liquide.

**18.** Procédé selon l'une des revendications 12 à 17 dans lequel une ligne (5a) est connectée entre les moyens (5) de recyclage dans le premier réacteur-contacteur de la solution monophasique provenant du premier réacteur-contacteur, qui a été refroidie et l'entrée du moyen de refroidissement (190) de la phase liquide.

**Claims**

**1.** A process for the treatment of a gas containing hydrogen sulphide and sulphur dioxide in which the gas (3) is brought into contact with at least one organic solvent in a first gas-liquid contact and reaction zone and an effluent containing water and sulphur vapour is recovered separately from an effluent containing liquid sulphur, the process being **characterized in that** the gaseous effluent is introduced into a second reaction and contact zone and is brought into contact under suitable conditions with at least one recycled organic solvent which is depleted in sulphur, a purified gas substantially no longer containing sulphur vapour is recovered separately from said solvent which is rich in sulphur, at least a portion of said sulphur-rich solvent is removed, advantageously at most 50% of the flow, said portion of solvent is cooled to obtain a suspension of sulphur crystals in the solvent, the sulphur crystals are separated from the solvent and said portion of cooled solvent which is depleted in sulphur is recycled at least in part to the second contact zone, the process being further **characterized in that** at least one of the two contact zones contains at least one reaction catalyst.

**2.** A process according to claim 1, in which the remaining portion of the solvent which is rich in sulphur is recycled to the head of the second contact zone.

3. A process according to claim 1 or claim 2, in which said portion of solvent for depleting in sulphur is cooled by indirect heat exchange.

4. A process according to any one of claims 1 to 3, in which said portion of solvent for depletion is cooled by mixing with a suitable quantity of water, preferably with a quantity such that a solvent-water mixture containing 30% to 70% by weight of water is obtained.

5. A process according to any one of claims 1 to 4, in which said portion of solvent is cooled to a temperature which is lower than the melting temperature of sulphur, preferably to a temperature which is in the range 40°C to 110°C.

6. A process according to any one of claims 1 to 5, in which at least a portion of a single-phase solution of said organic solvent is extracted from the lower portion of the first contact zone, it is cooled to eliminate at least a portion of the heat of reaction released and recycled to the first contact zone.

7. A process according to any one of claims 1 to 6, in which the temperature of the second contact zone is lower than the temperature of the first.

8. A process according to any one of claims 1 to 7, in which the organic solvent of the first contact zone and the organic solvent of the second contact zone are the same solvent.

9. A process according to any one of claims 1 to 8, in which the first contact zone contains the catalyst.

10. A process according to any one of claims 1 to 9, in which both the gas and organic solvent in the first contact zone and the gaseous effluent and organic solvent in the second contact zone are brought into contact in counter-current mode, the gas supply or the gaseous effluent supply being made to the lower portion of the contact zones and the organic solvent supply being made to the upper portion of the contact zones.

11. A process according to any one of claims 1 to 10, in which both the gas and organic solvent in the first contact zone and the gaseous effluent and organic solvent in the second contact zone are brought into contact in cocurrent mode, the gas supply or gaseous effluent supply being made to the upper portion of the contact zones along with the supply of organic solvent.

12. A process according to any one of claims 1 to 11 implemented in an apparatus comprising a first gas-liquid reactor-contactor (2), means (3) for supplying a gas to be treated and means (5) for supplying an organic solvent, means (25) for recovering sulphur and means (20) for extracting a gaseous effluent containing sulphur in vapour form, the apparatus further comprising a second reactor-contactor (102) connected to the means for extracting the gaseous effluent, means (105) for supplying an organic solvent which is depleted in sulphur connected to the second reactor-contactor, means (120) for recovering a gaseous effluent which has been cleaned of sulphur connected to the second reactor-contactor, means (104) for extracting a liquid phase containing the organic solvent and sulphur connected to the second reactor-contactor, at least one means for depleting at least a portion of the liquid phase in sulphur connected to the means for extracting the liquid phase, comprising at least one means (190) for cooling said phase connected to a means (118) for separating solid sulphur which delivers a solid phase (125) of sulphur at a first end and a liquid phase (121) which is depleted in sulphur at a second end, the second end being connected to means (105) for supplying solvent depleted in sulphur, the apparatus further comprising at least one of the reactor-contactors which contains a reaction catalyst.

13. A process according to claim 12, in which a line (104a) connected to the means (104) for extracting the liquid phase containing the organic solvent and sulphur is connected to means (105) for supplying organic solvent which is depleted in sulphur.

14. A process according to claim 12 or claim 13, in which the cooling means is selected from the group formed by a heat exchanger, water addition and a combination of the two.

15. A process according to any one of claims 12 to 14, in which the first reactor-contactor (2) comprises at its lower side means (4) for extracting a single-phase solution, means (19) for monitoring and controlling the temperature of the solution associated with a heat exchanger and connected to the solution extraction means and means (5) for recycling the single-phase cooled solution to the first reactor-contactor.

**16.** A process according to any one of claims 12 to 15 in which the first reactor-contactor (2) and the second reactor-contactor (102) are contained in the same vessel.

**17.** A process according to claim 12 in which the second reactor-contactor comprises a venturi-scrubber type mixer-contactor associated with a separator for separating purified gaseous effluent from the liquid phase.

**18.** A process according to any one of claims 12 to 17, in which a line (5a) is connected between the means (5) for recycling the single-phase solution from the first reactor-contactor to the first reactor-contactor, which has been cooled, to the inlet to the liquid phase cooling means (190).


**Patentansprüche**

**1.** Verfahren zur Behandlung eines Schwefelwasserstoff und Schwefeldioxid enthaltenden Gases, in dem man in einer ersten Kontakt- und Gasflüssigkeitsreaktionszone das Gas (3) mit wenigstens einem organischen Lösungsmittel kontaktiert und man getrennt einen Wasser und Schwefeldampf enthaltenden Abstrom und flüssigen Schwefel gewinnt, wobei das Verfahren **dadurch gekennzeichnet ist, dass** man den gasförmigen Abstrom in eine zweite Kontakt- und Reaktionszone einführt, man unter geeigneten Bedingungen ihn mit wenigstens einem an Schwefel verarmten rezyklierten organischen Lösungsmittel kontaktiert, man getrennt ein gereinigtes im wesentlichen keinen Schwefeldampf enthaltendes Gas und das schwefelreiche Lösungsmittel gewinnt, man einen Teil wenigstens dieses schwefelreichen Lösungsmittels, vorteilhaft höchstens 50 % des Durchsatzes entnimmt, man diesen Teil des Lösungsmittels derart kühlt, dass eine Schwefelkristallsuspension in dem Lösungsmittel erhalten wird, man die Schwefelkristalle von dem Lösungsmittel trennt und man diesen Teil des gekühlten, wenigstens teilweise an Schwefel verarmten Lösungsmittels in die zweite Kontaktzone rezykliert, wobei das Verfahren im übrigen sich dadurch auszeichnet, dass wenigstens eine der beiden Kontaktzonen wenigstens einen Reaktionskatalysator enthält.

**2.** Verfahren nach Anspruch 1, in dem der verbleibende Teil des schwefelreichen Lösungsmittels am Kopf in die zweite Kontaktzone rezykliert wird.

**3.** Verfahren nach Anspruch 1 oder 2, in dem man den Teil des Lösungsmittels kühlt, der vorgesehen ist, um an Schwefel durch indirekten Wärmeaustausch verarmt zu werden.

**4.** Verfahren nach einem der Ansprüche 1 bis 3, in dem man den Lösungsmittelteil kühlt, der vorgesehen ist, um durch Mischen mit einer geeigneten Wassermenge, vorzugsweise mit einer Menge derart, dass man eine Lösungsmittel-Wassermischung erhält, die 30 - 70 Gew.-% Wasser enthält, verarmt zu werden.

**5.** Verfahren nach einem der Ansprüche 1 bis 4, in dem man den Lösungsmittelteil bei einer Temperatur unterhalb der Schmelztemperatur des Schwefels und vorzugsweise bei einer Temperatur zwischen 40 und 110°C kühlt.

**6.** Verfahren nach einem der Ansprüche 1 bis 5, in dem man wenigstens teilweise eine monophasische Lösung des organischen Lösungsmittels aus dem unteren Teil der ersten Kontaktzone abzieht, man ihn derart kühlt, dass ein Teil wenigstens der eingesetzten Reaktionswärme entfernt wird, und man ihn in die erste Kontaktzone rezykliert.

**7.** Verfahren nach einem der Ansprüche 1 bis 6, in dem die Temperatur der zweiten Kontaktzone geringer als die Temperatur der ersten ist.

**8.** Verfahren nach einem der Ansprüche 1 bis 7, in dem das organische Lösungsmittel der ersten Kontaktzone und das organische Lösungsmittel der zweiten Kontaktzone ein und das gleiche Lösungsmittel sind.

**9.** Verfahren nach einem der Ansprüche 1 bis 8, in dem die erste Kontaktzone den Katalysator enthält.

**10.** Verfahren nach einem der Ansprüche 1 bis 9, in dem man das Kontaktieren des Gases und des organischen Lösungsmittels in der ersten Kontaktzone und jenes des gasförmigen Abstroms und des organischen Lösungsmittels in der zweiten Kontaktzone bei Gegenstrom durchführt, wobei die Versorgung mit Gas oder mit gasförmigem Abstrom in dem unteren Teil der Kontaktzonen und die Versorgung an organischem Lösungsmittel in dem oberen Teil der Kontaktzonen durchgeführt wird.

**11.** Verfahren nach einem der Ansprüche 1 bis 10, in dem man das Kontaktieren des Gases und des organischen Lösungsmittels in der ersten Kontaktzone und jenes des gasförmigen Abstroms und des organischen Lösungsmittels in der zweiten Kontaktzone bei Gleichstrom durchführt, wobei die Versorgung mit Gas oder mit gasförmigem Abstrom im oberen Teil der Kontaktzonen sowie die Versorgung mit organischem Lösungsmittel durchgeführt wird.

**12.** Verfahren nach einem der Ansprüche 1 bis 11, gemäß dem man in einer einen ersten Gasflüssigkontaktreaktor (2) umfassenden Vorrichtung Mittel (3) zur Zufuhr an zu behandelndem Gas und Mittel (5) zur Zufuhr an organischem Lösungsmittel, Mittel (25) zur Gewinnung des Schwefels und Mittel (20) zum Austritt eines gasförmigen den Schwefel in Dampfform enthaltenden Abstroms am Kopf des Kontaktreaktors einsetzt und die Vorrichtung zusätzlich einen zweiten Kontaktreaktor (102) umfasst, der mit den Austrittsmitteln für den gasförmigen Abstrom verbunden ist, Mittel (105) zur Versorgung mit einem organischen an Schwefel verarmten Lösungsmittel, die mit dem zweiten Kontaktreaktor verbunden sind, Mittel zur Gewinnung (120) eines gasförmigen an Schwefel gereinigten Abstroms, die mit dem zweiten Kontaktreaktor verbunden sind, Mittel zum Abziehen (104) einer das organische Lösungsmittel und Schwefel enthaltenden Flüssigphase, doe mit dem zweiten Kontaktreaktor verbunden sind, wenigstens einem Mittel zur Abreicherung an Schwefel von einem Teil wenigstens der flüssigen Phase, das mit den Mitteln zum Abziehen der Flüssigphase verbunden ist, das wenigstens ein Mittel (190) zur Kühlung dieser Phase umfasst, das mit einem Mittel zur Kühlung dieser Phase verbunden ist, welches mit einem Mittel zur Trennung (118) des festen Schwefels verbunden ist, das eine feste Schwefelphase (125) an einem ersten Ende und eine flüssige an Schwefel verarmte Phase (121) an einem zweiten Ende liefert, wobei das zweite Ende mit den Mitteln (105) zur Versorgung mit an Schwefel verarmtem Lösungsmittel verbunden ist und die Vorrichtung im übrigen wenigstens einen der Kontaktreaktoren aufweist, der einen Reaktionskatalysator enthält.

**13.** Verfahren nach Anspruch 12, in dem eine mit Mitteln (104) zum Abziehen der flüssigen organisches Lösungsmittel und Schwefel enthaltende Flüssigphase verbundene Leitung (104a) mit Mitteln (105) zur Versorgung an organischem an Schwefel verarmten Lösungsmittel verbunden ist.

**14.** Verfahren nach einem der Ansprüche 12 bis 13, in dem das Kühlmittel aus der durch einen Wärmetauscher, einen Wasserzusatz und einer Kombination der beiden gebildeten Gruppe gewählt ist.

**15.** Verfahren nach einem der Ansprüche 12 bis 14, in dem der erste Kontaktreaktor (2) außenseitig unten ein Mittel (4) zum Abziehen einer monophasischen Lösung, Mittel (19) zur Temperaturregelung der Lösung, die einem Wärmetauscher zugeordnet und mit dem Mittel zum Abziehen der Lösung verbunden sind, und Mittel zur Rezyklierung (5) der monophasischen in dem ersten Kontaktreaktor gekühlten Lösung umfasst.

**16.** Verfahren nach einem der Ansprüche 12 bis 15, in dem der erste Kontaktreaktor (2) und der zweite Kontaktreaktor (102) in einem ersten Gefäß enthalten sind.

**17.** Verfahren nach Anspruch 12, in dem der zweite Kontaktreaktor einen Kontaktmischer vom Typ Venturi-Scrubber umfasst, der einem Separator für den gereinigten gasförmigen Abstrom von der flüssigen Phase zugeordnet ist.

**18.** Verfahren nach einem der Ansprüche 12 bis 17, in dem eine Leitung (5a) zwischen den Mitteln (5) zur Rezyklierung in den ersten Kontaktreaktor der monophasischen vom ersten Kontaktreaktor kommenden Lösung, die gekühlt worden ist, und dem Eingang des Mittels zur Kühlung (190) der Flüssigphase angeschlossen ist.

FIG.1

FIG.3

FIG.2